# FASCICULE DE BREVET EUROPEEN

(11) **EP 0 392 915 B1**
(45) Date de publication et mention de la délivrance du brevet: **24.08.1994**
(21) Numéro de dépôt: 90400974.3
(22) Date de dépôt: 10.04.1990
(51) Int. Cl.: H04M 11/06

(54) **Terminal de transmission de données pour réseau numérique compatible avec les terminaux raccordés au réseau commuté**
Datenübertragungsterminal für digitales Netz, kompatibel mit an dem Sprechnetz angeschlossenen Endgeräten
Data transmission terminal for digital network compatible with terminals connected to the switched network

(30) Priorité: 13.04.1989 FR 8904892
(43) Date de publication de la demande: 17.10.1990
(73) Titulaire: SOCIETE D'APPLICATIONS GENERALES D'ELECTRICITE ET DE MECANIQUE SAGEM, F-75783 Paris Cédex 16 (FR)
(72) Inventeur: Frédéric, Alain, F-95000 Cergy (FR)
(74) Mandataire: Bloch, Gérard

(56) Documents cités:
- DE-A- 3 309 888
- DE-A- 3 323 592

## Description

La présente invention a pour objet un terminal de transmission de données numériques comprenant des moyens d'émission-réception de données numériques raccordés à une ligne d'un réseau téléphonique.

De tels terminaux sont utilisés pour échanger des données numériques entre eux ou avec des bases de données, par le biais du même réseau que celui utilisé pour transmettre, à l'intérieur d'un même pays, ou entre deux pays différents, les conversations téléphoniques. Lorsqu'ils sont destinés à être employés directement par un utilisateur, ces terminaux comprennent en général, en plus de moyens d'émission-réception de données numériques, un écran de visualisation et un clavier. Ils peuvent également comporter des moyens de calcul pour traiter les données reçues ou à émettre. Un exemple assez répandu de ces terminaux est celui connu en France sous le nom de "Minitel".

A l'heure actuelle, parmi les terminaux de transmission de données existants, on distingue deux types, selon la nature du réseau, ou de la partie de ce réseau, auquel ils sont raccordés.

Le premier type est celui destiné à être raccordé à un réseau téléphonique commuté. On sait qu'un tel réseau, de conception relativement ancienne, est caractérisé par la nature analogique des signaux acheminés sur les lignes de raccordement aux abonnés. A l'origine du réseau commuté, la transmission se faisait, d'un bout à l'autre du réseau, à l'aide de signaux analogiques. Aujourd'hui, il est fréquent que la transmission entre centraux téléphoniques se fasse sous forme numérique pour des raisons de commodité, les signaux échangés entre l'abonné et le central auquel il est raccordé demeurant néanmoins analogiques. Il est donc nécessaire de prévoir, dans un terminal de transmissions de données raccordé à une ligne du réseau téléphonique commuté, un dispositif de transformation des données numériques à émettre en un signal analogique du type compatible avec cette ligne, et vice versa. Un tel dispositif de transformation comprend un modulateur pour moduler, en réponse aux données numériques à émettre, un signal analogique émis sur la ligne et un démodulateur pour, lorsqu'un signal analogique modulé est reçu sur la ligne, démoduler ce signal afin de restituer les données numériques destinées au terminal. Un tel dispositif modulateur-démodulateur est appelé couramment "modem". Ainsi le premier type de terminal de transmissions de données numériques, destiné à être raccordé à un réseau téléphonique commuté comprend donc nécessairement un modem interposé entre la ligne de raccordement et les moyens d'émission-réception de données numériques du terminal.

Le second type de terminal de transmissions de données numériques actuellement connu est celui destiné à être raccordé à un réseau téléphonique numérique, comme le réseau en cours d'implantation en France par exemple, et connu sous le nom "réseau numérique à intégration de services". Dans un tel réseau, la transmission est effectuée partout sous forme numérique, et notamment sur la ligne qui relie un abonné à son central téléphonique. Il en résulte que les moyens d'émission-réception de données numériques du terminal sont raccordés directement à la ligne d'abonné. Ainsi, un terminal de transmission de données numériques destiné à être raccordé à un réseau téléphonique numérique ne comporte pas de modem.

Par ailleurs, il faut noter que si le réseau téléphonique numérique à intégration de services, de conception plus moderne que le réseau téléphonique commuté, est destiné à prendre la place de celui-ci, un tel remplacement ne peut être que progressif. Il est donc nécessaire d'envisager une période plus ou moins longue au cours de laquelle les deux réseaux, commuté et numérique, devront coexister.

Une telle coexistence est rendue possible du fait que, comme cela a déjà été signalé, il est relativement fréquent aujourd'hui que la transmission entre centraux téléphoniques du réseau téléphonique commuté se fasse sous forme numérique. De ce fait, il est possible de prévoir, entre une liaison numérique du réseau commuté et un central du réseau numérique, une "passerelle" qui permet au réseau commuté et au réseau numérique de communiquer malgré leur différence de nature. En effet, du fait que les signaux des deux côtés de la passerelle sont sous forme numérique, celle-ci comprend principalement un convertisseur de signalisation. La passerelle, ou interface, permet alors une conversation téléphonique entre un abonné du réseau commuté et un abonné du réseau numérique car la transformation des signaux numériques transitant par la passerelle en signaux analogiques acoustiques est assurée, du côté du réseau commuté et du côté du réseau numérique par les mêmes circuits, en l'occurrence des codeur-décodeurs du type connu par l'homme du métier sous le nom de "transcodeur en loi A" ou "transcodeur en loi »". En effet, du côté du réseau commuté, il est prévu, dans le central, un codeur-décodeur de ce type, pour transformer le signal analogique émis sur la ligne d'abonné en un signal numérique et inversement. Une telle transformation a notamment alors pour but de permettre la transmission de l'information utile sans les répéteurs qui seraient nécessaires si l'on conservait les signaux sous forme analogique, et de permettre également un multiplexage temporel plus simple que le multiplexage fréquentiel nécessaire avec ces signaux analogiques. Du côté du réseau numérique, c'est dans le combiné de l'abonné que se trouve le codeur-décodeur, puisque les signaux qui transitent sur la ligne d'abonné doivent être numériques.

Un codeur-décodeur "en loi A" ou "en loi »" est un circuit pourvu d'un accès numérique et d'un accès analogique, chacun des accès pouvant jouer le rôle d'une entrée ou d'une sortie. Lorsqu'un signal analogique est incident sur l'accès analogique, il est transformé en un signal numérique délivré sur l'accès numérique. A cet effet, le codeur-décodeur comprend un échantillonneur-bloqueur suivi d'un convertisseur analogique-numérique à loi de conversion non-linéaire, loi choisie en fonction des conditions de transmissions sur les lignes, et susceptible de varier d'un pays à l'autre. Actuellement deux types de ces lois, dite "en A" ou "en »", bien connues de l'homme du métier, sont principalement utilisées. Parallèlement, lorsqu'un signal numérique est incident sur l'accès numérique, il est transformé en un signal analogique délivré sur l'accès analogique. A cet effet, le codeur-décodeur comprend un convertisseur numérique-analogique à loi de conversion non-linéaire inverse de la précédente, suivi d'un filtre passe-bas.

Il apparaît donc clairement que le signal de parole, analogique, de l'abonné raccordé au réseau numérique, est codé en un signal numérique dans le combiné de cet abonné, et transmis ainsi jusqu'au central du réseau commuté où il est décodé et donc remis dans son état analogique initial pour être ainsi transmis sur la ligne de l'abonné raccordé au réseau commuté. Inversement, le signal de parole, analogique, de l'abonné raccordé au réseau commuté est transmis sous cette forme jusqu'au central du réseau commuté, où il est codé en un signal numérique pour être ainsi acheminé jusqu'au combiné de l'abonné raccordé au réseau numérique, combiné dans lequel il est décodé et remis dans son état analogique initial.

Toutefois, si, comme cela vient d'être expliqué, les conversations téléphoniques entre un abonné raccordé au réseau commuté et un abonné raccordé au réseau numérique sont possibles, il n'en va pas de même pour les échanges de données numériques. En effet, en prenant par exemple le cas de données à émettre depuis un terminal raccordé au réseau numérique vers un terminal raccordé au réseau commuté, ces données numériques sont directement transmises jusqu'au central du réseau commuté, dans lequel elles vont se trouver transformées en un signal analogique qui va être acheminé sur la ligne de l'abonné raccordé au réseau commuté, vers le modem du terminal de transmission de données de cet abonné. Or d'une part ce modem n'est pas prévu pour restituer les données numériques de départ, car la démodulation du signal analogique reçu qu'il effectue n'est pas l'opération inverse du décodage effectué dans le codeur-décodeur, et d'autre part il n'est de toutes façons pas possible, en l'absence d'un signal de synchronisation en provenance du codeur-décodeur, de récupérer les données numériques de départ à partir du seul signal analogique disponible sur la ligne de l'abonné raccordé au réseau commuté. En effet, pour pouvoir récupérer ces données numériques, il faudrait savoir à quels instants précis doivent être prélevés les échantillons du signal analogique pour que ceux-ci soient effectivement représentatifs des données numériques d'origine. En l'absence d'une telle information, il est en effet hasardeux de convertir sous forme numérique des échantillons du signal analogique prélevés certes périodiquement sur ce signal, mais à des instants où il n'y a aucune raison pour que la valeur de celui-ci soit représentative d'une donnée numérique d'origine, et où il y a au contraire toutes les chances pour que cette valeur soit intermédiaire entre deux valeurs représentatives de données numériques d'origine. Ainsi, l'émission de données numériques depuis un terminal connu raccordé au réseau numérique vers un terminal connu raccordé au réseau commuté risque de donner des résultats fantaisistes. Pour des raisons analogues, l'émission de données numériques depuis un terminal raccordé au réseau commuté vers un terminal raccordé au réseau numérique n'est pas envisageable. En effet, dans ce cas, les données numériques à émettre servent à moduler un signal analogique engendré dans le modem du terminal raccordé au réseau commuté. Le signal analogique modulé est acheminé jusqu'au central de raccordement de l'abonné du réseau commuté, dans lequel le codeur-décodeur le transforme en un signal numérique qui va être transmis directement vers le terminal raccordé au réseau numérique. Malheureusement ce signal numérique qui résulte de la conversion analogique-numérique du signal analogique modulé représentatif des données numériques émises n'est pas exploitable par le terminal raccordé au réseau numérique, qui est fait pour recevoir directement des données numériques. Ceci est du notamment au fait que l'opération de codage effectuée dans le codeur-décodeur du central n'est pas l'opération inverse de l'opération de modulation effectuée dans le modem, dans lequel, on le rappelle, les données numériques ne sont pas simplement converties en des échantillons analogiques, mais servent à moduler un signal analogique porteur. Là encore, l'émission de données numériques depuis un terminal connu raccordé au réseau commuté vers un terminal connu raccordé au réseau numérique risque donc de donner des résultats fantaisistes.

Fort heureusement, ces connexions susceptibles de conduire à des transmissions erronées ne sont pas possibles du fait qu'il est prévu, sur le réseau numérique, un échange d'information au cours d'une procédure de connexion de deux abonnés, échange au cours duquel la nature de la communication à venir, conversation téléphonique ou échange de données numériques, est précisée. Cette précision est interprétée par le réseau comme une autorisation ou une interdiction d'utiliser certains types de canaux de communication pour établir la communication. Ainsi, pour une conversation téléphonique, le canal de communication peut être du type connu de l'homme du métier sous le nom de "canal non transparent", ce qui signifie notamment que les signaux transmis peuvent subir en cours de transmission une conversion analogique-numérique puis une conversion numérique-analogique non synchrone de la première. En effet, comme les signaux transmis sont analogiques, aucune perte notable d'information n'apparaîtra dans ce cas. Par contre, pour les échanges de données, le canal de communication doit impérativement être du type connu par l'homme du métier sous le nom de "canal transparent" ce qui signifie notamment qu'une conversion numérique-analogique suivie d'une conversion analogique-numérique non synchrone n'est pas autorisée, pour les raisons qui ont déjà été expliquées. Il en résulte que toute communication dans laquelle intervient un terminal de transmissions de données numériques raccordé au réseau numérique est accompagné d'une demande de "canal transparent", ce qui interdit son raccordement au réseau commuté, et donc à un terminal de données raccordé à ce réseau.

Ainsi, en cas de coexistence d'un réseau commuté et d'un réseau numérique, les conversations téléphoniques entre un abonné relié au réseau commuté et un abonné relié au réseau numérique sont possibles, alors que les échanges de données numériques ne le sont pas.

La présente invention vise à pallier cet inconvénient en procurant un terminal de transmission de données numériques destiné à être raccordé à un réseau numérique, compatible avec les terminaux raccordés au réseau commuté coexistant avec le réseau numérique, pour échanger des données avec eux.

A cet effet, elle a pour objet un terminal de transmission de données numériques raccordé à une ligne d'un réseau téléphonique numérique pour lequel, au cours d'une procédure de connexion, une demande de canal non transparent (CCBNT) ou transparent (CCBT) est formulée selon que la communication à établir est une conversation ou un échange de données numériques, respectivement, comprenant des moyens d'emission-réception de données numériques, un modulateur-démodulateur, pour moduler un signal analogique selon des données numériques et réaliser l'opération de démodulation inverse, et un codeur-décodeur, pour coder un signal analogique sous forme numérique et réaliser l'opération de décodage inverse, terminal caractérisé par le fait qu'il comporte en outre des moyens de raccordement sélectif pour, en réponse à une demande de canal non transparent (CCBNT), raccorder lesdits moyens d'émission-réception à ladite ligne par l'intermédiaire dudit modulateur-démodulateur suivi dudit codeur-décodeur et pour, en réponse à une demande de canal transparent (CCBT), raccorder lesdits moyens d'émission-réception directement à ladite ligne, ledit terminal étant compatible avec des terminaux raccordés à un réseau téléphonique commuté pour lesquels seule une demande CCBNT peut être formulée.

Avec le terminal de l'invention, les données numériques, qu'elles transitent du réseau numérique vers le réseau commuté, ou du réseau commuté vers le réseau numérique, subissent d'abord une opération de modulation, puis une opération de codage et, après transmission sous forme numérique, les opérations de décodage, puis de démodulation inverses des opérations de modulation et de codage précédentes. Elles sont donc restituées exactement comme elles ont été émises, sans problème lié à l'absence de synchronisation, du fait de l'utilisation des modems qui permet d'effectuer des traitements non synchrones sur les signaux modulés sans dégradation de l'information qu'ils véhiculent. De plus, grâce aux moyens de raccordement sélectif, le terminal de l'invention est en permanence prêt à recevoir des données numériques, que celles-ci proviennent d'un terminal raccordé au réseau numérique, ou raccordé au réseau commuté. Ce résultat remarquable, qui évite donc d'avoir à placer à l'avance le terminal dans une configuration adaptée à la provenance des données à recevoir, a été obtenu par la demanderesse car elle a remarqué qu'une demande de canal non transparent, dans le cas d'une réception d'appel, est relative soit à un appel pour une conversation en provenance d'un abonné raccordé au réseau numérique, soit à un appel en provenance du réseau commuté, auquel cas et comme cela a déjà été signalé, le canal ne peut être que non transparent. Un tel appel en provenance du réseau commuté peut être relatif soit à une conversation, soit à un échange de données numériques modulées et codées. Lorsque l'appel correspond à une conversation téléphonique, il est sans importance que les moyens de raccordement sélectif raccordent les moyens d'émission-réception à la ligne par l'intermédiaire du modem et du codeur-décodeur, puisque le terminal ne peut être utilisé pour la conversation. Par contre, dans le cas d'un échange de données, la configuration du terminal sera satisfaisante. Par ailleurs, une demande de canal transparent ne pouvant provenir que d'un terminal raccordé au réseau numérique, les moyens de raccordement placent alors le terminal de l'invention dans sa configuration normale, sans passer par l'adaptateur comprenant le modem et le codeur décodeur.

DE-A-33 23 592 enseigne bien un terminal du type auquel s'applique l'invention, mais il n'offre évidemment pas la compatibilité de celui de l'invention.

Avantageusement, lesdits moyens de raccordement sélectif comprennent des moyens de détection des demandes de canal non transparent en provenance dudit réseau lors d'une procédure de connexion consécutive à une réception d'appel, et des moyens de génération sélective d'une telle demande lors d'une procédure de connexion consécutive à une émission d'appel.

Dans ce cas, les moyens de raccordement sélectif sont relativement simples.

Avantageusement encore, lesdits moyens de génération sélective comprennent des moyens pour, en réponse au numéro de l'abonné appelé, déterminer si cet abonné est raccordé à un réseau téléphonique commuté et, dans l'affirmative, commander une demande de canal non transparent.

Dans ce cas, l'abonné n'a pas à se préoccuper, lorsqu'il émet un appel, de savoir si son correspondant est raccordé au réseau commuté ou au réseau numérique.

La présente invention sera mieux comprise grâce à la description suivante de la forme de réalisation préférée du terminal de l'invention, faite en se référant aux dessins annexés, sur lesquels :
- la figure 1 représente un schéma par blocs du terminal de l'invention raccordé à un réseau téléphonique numérique coexistant avec un réseau téléphonique commuté auquel est raccordé un autre terminal,
- la figure 2 représente un schéma par blocs du circuit de raccordement sélectif du terminal de la figure 1.

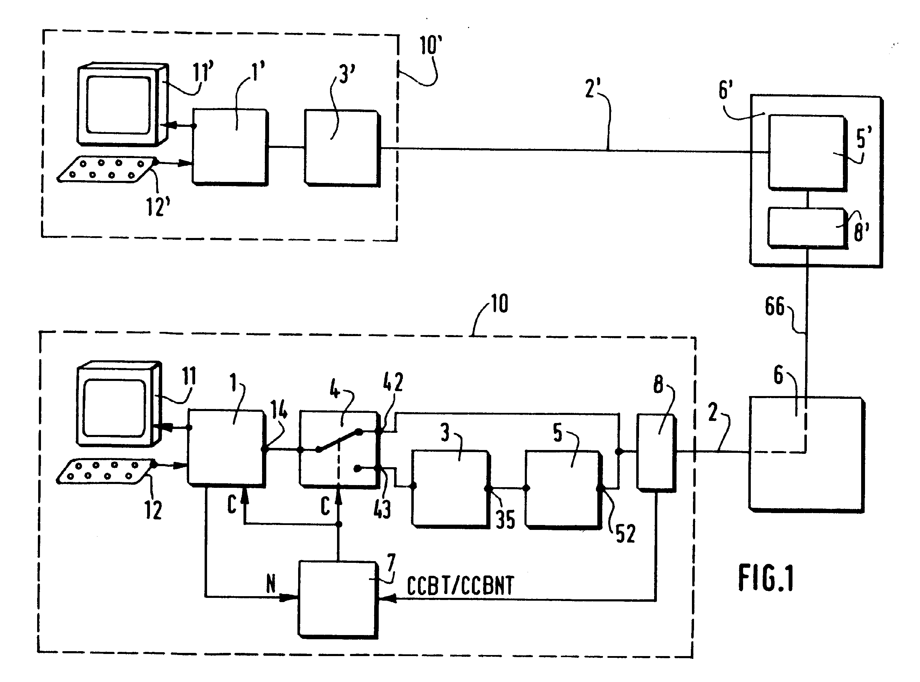

En se référant à la figure 1, un terminal 10 de transmission de données numériques, raccordé à un réseau téléphonique numérique du type réseau numérique à intégration de services (RNIS) est maintenant décrit.

Sur la figure 1, et dans un souci de simplicité, seul un central 6 du réseau numérique a été représenté. Le terminal 10 est raccordé au central 6 par une ligne téléphonique 2, sur laquelle transitent, de façon connue, des signaux numériques.

Le terminal 10 comprend un circuit d'émission-réception 1 de données numériques, pourvu d'un accès d'émission-réception 14, d'une entrée recevant un signal C et d'une sortie délivrant un signal N. Le circuit 1 est également pourvu, ici, d'une sortie reliée à un écran de visualisation 11 ainsi que d'une entrée reliée à un clavier 12.

Un commutateur commandable 4, à deux positions, est pourvu d'un contact mobile relié à l'accès 14, de deux contacts fixes 42 et 43 et d'une entrée de commande recevant le signal C. Le contact fixe 42 est relié à la ligne 2 par l'intermédiaire d'un circuit d'interface 8, ici pourvu d'un accès de signalisation délivrant un signal CCBT/CCBNT. Le circuit 8 est du type connu par l'homme du métier sous le nom de circuit "d'interface S" avec la ligne 2.

Un modem 3 est pourvu d'un accès numérique relié au contact fixe 43 et d'un accès analogigue 35. De façon connue, le modem comprend un circuit de modulation pour moduler un signal analogigue qu'il délivre sur son accès 35 selon les données numériques qu'il reçoit sur son accès relié au contact 43. Il comprend également un circuit de démodulation pour réaliser l'opération inverse, c'est-à-dire démoduler les signaux analogiques modulés qu'il reçoit sur son accès 35 pour restituer sur son accès relié au contact 43 les données numeriques correspondantes.

Un codeur-décodeur 5 est pourvu d'un accès analogique relié à l'accès 35 et d'un accès numérique 52 relié à la ligne 2 par l'intermédiaire du circuit d'interface 8. De façon connue, le modem comprend un échantillonneur-bloqueur et un convertisseur analogique-numérique à loi de conversion non linéaire, du type "A" ou "»" dont il a déjà été question, pour coder le signal analogique incident sur l'accès 35 sous une forme numérique délivrée sur l'accès 52. Il comprend également un circuit de décodage pour réaliser l'opération inverse, c'est-à-dire décoder les signaux numériques codés qu'il reçoit sur accès 52 pour restituer sur son accès 35 le signal analogique correspondant.

Un circuit 7 de commande du commutateur 4 est pourvu d'une sortie délivrant le signal C, et de deux entrées recevant l'une le signal N en provenance du circuit 1, l'autre le signal CCBT/CCBNT en provenance du circuit 8.

Sur la figure 1, on a représenté un central 6′ d'un réseau téléphonique commuté relié au central 6 par un canal numérique 66, ainsi qu'un terminal 10′ de transmission de données numériques raccordé au central 6′. Le terminal 10′ comprend ici seulement un écran 11′, un clavier 12′, un circuit d'émission-réception 1 et un modem 3′ comparables à l'écran 11, au clavier 12, au circuit 1 et au modem 3, respectivement, du terminal 10. Le modem 3′ est relié au central 6′ par une ligne téléphonique 2′ sur laquelle transitent des signaux analogiques. Dans le central 6′, il est prévu un codeur-décodeur 5′ identique au codeur-décodeur 5, relié au canal numérique 66 par l'intermédiaire d'un circuit d'interface 8′ analogue au circuit 8.

Le terminal 10 qui vient d'être décrit fonctionne comme suit. Dans le cas d'une réception d'appel provenant d'un terminal de transmissions de données raccordé au réseau numérique, lors de la procédure de connexion, une demande de canal transparent est formulée et aboutit au terminal en provenance du réseau. Celle-ci, notée CCBT de façon bien connue de l'homme du métier, est détectée par le circuit 7 qui, en réponse, commande le commutateur 4 pour raccorder le circuit 1 directement à la ligne 2. L'échange de données peut alors avoir lieu de façon usuelle sur le réseau numérique.

Par contre, si, dans le cas d'une réception d'appel, une demande de canal non transparent, notée CCBNT, provient du réseau, le circuit 7 commande, en réponse, le commutateur 4 pour raccorder le circuit 1 à la ligne 2 par l'intermédiaire du modem 3 suivi du codeur-décodeur 5, de façon à être prêt à échanger des données si l'appel provient du terminal 10′ par exemple. Dans ce cas, l'échange a lieu sans difficultés. Ainsi les données en provenance du terminal 10′, ayant été modulées dans le modem 3′ puis codées dans le codeur-décodeur 5′, subiront les opérations inverses de décodage et de démodulation dans le codeur-décodeur 5 puis dans le modem 3. De même, les données en provenance du terminal 10 seront modulées dans le modem 3, codées dans le codeur-décodeur 5, puis décodées dans le codeur-décodeur 5′ et démodulées dans le modem 3′.

Dans le cas d'une émission d'appel par le terminal 10, on sait si l'abonné que l'on désire appeler est raccordé au réseau commuté ou au réseau numérique, et il est alors facile d'engendrer, de façon sélective, une demande de canal non transparent ou une demande de canal transparent.

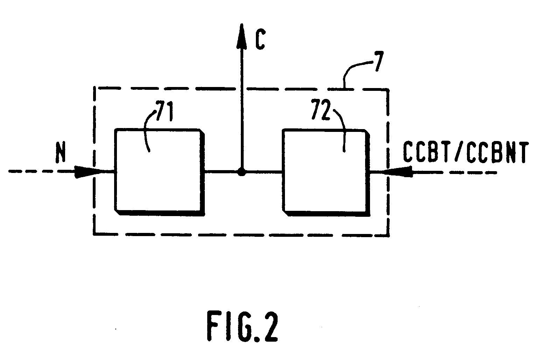

L'utilisateur du terminal 10 peut alors actionner manuellement le commutateur 4, mais ici, il a été prévu, dans le circuit 7, et comme cela est représenté sur la figure 2, un circuit 71 qui, en réponse au signal N représentant le numéro de l'abonné appelé, détermine si cet abonné est raccordé au réseau commuté et dans l'affirmative, commande, par l'intermédiaire du signal C, le commutateur 4 pour relier le circuit 1 à la ligne 2 par l'intermédiaire du modem 3 et du codeur-décodeur 5. Simultanément, le circuit 1, en réponse au signal C, engendre une demande de canal non transparent.

Sur la figure 2, on a également représenté le circuit 72 qui détecte les demandes de canal non transparent en provenance du réseau et reçoit donc le signal noté CCBT/CCBNT, et commande également le commutateur 4 par l'intermédiaire du signal C.

Ainsi, il apparaît bien que le commutateur 4 et le circuit 7 ont pour fonction de raccorder de façon sélective le circuit 1 à la ligne 2, soit directement, soit par l'intermédiaire de l'adaptateur formé par les circuits 3 et 5.

## Revendications

1. Terminal (10) de transmission de données numériques raccordé à une ligne (2) d'un réseau téléphonique numérique pour lequel, au cours d'une procédure de connexion, une demande de canal non transparent (CCBNT) ou transparent (CCBT) est formulée selon que la communication à établir est une conversation ou un échange de données numériques, respectivement, comprenant des moyens (1) d'émission-réception de données numériques, un modulateur-démodulateur (3), pour moduler un signal analogique selon des données numériques et réaliser l'opération de démodulation inverse, et un codeur-décodeur (5), pour coder un signal analogique sous forme numérique et réaliser l'opération de décodage inverse, terminal caractérisé par le fait qu'il comporte en outre des moyens de raccordement sélectif (4,7) pour, en réponse à une demande de canal non transparent (CCBNT), raccorder lesdits moyens d'émission-réception (1) à ladite ligne (2) par l'intermédiaire dudit modulateur-démodulateur (3) suivi dudit codeur-décodeur (5) et pour, en réponse à une demande de canal transparent (CCBT), raccorder lesdits moyens d'émission-réception (1) directement à ladite ligne (2), ledit terminal étant compatible avec des terminaux raccordés à un réseau téléphonique commuté pour lesquels seule une demande de canal non transparent (CCBNT) peut être formulée.

2. Terminal selon la revendication 1, dans lequel lesdits moyens de raccordement sélectif (4, 7) comprennent des moyens (72) de détection des demandes de canal non transparent (CCBNT) en provenance dudit réseau lors d'une procédure de connexion consécutive à une réception d'appel, et des moyens (1, 71) de génération sélective d'une telle demande lors d'une procédure de connexion consécutive à une émission d'appel.

3. Terminal selon la revendication 2, dans lequel lesdits moyens de génération sélective (1, 71) comprennent des moyens (71) pour, en réponse au numéro (N) de l'abonné appelé, déterminer si cet abonné est raccordé à un réseau téléphonique commuté et, dans l'affirmative, commander une demande de canal non-transparent.

## Patentansprüche

1. Terminal (10) zur Übertragung digitaler Daten, das an eine Leitung (2) eines digitalen Telefonnetzes angeschlossen ist und bei dem im Verlauf einer Verbindungsprozedur eine Anforderung eines nicht transparenten Kanals (CCBNT) oder eines transparenten Kanals (CCBT) formuliert wird, je nachdem, ob die herzustellende Verbindung ein Gespräch oder ein Austausch digitaler Daten ist, umfassend Sende/Empfangs-Mittel (1) für digitale Daten, einen Modulator-Demodulator (3), um ein analoges Signal digitalen Daten gemäß zu modulieren und den umgekehrten Vorgang der Demodulation durchzuführen, und einen Kodierer-Dekodierer (5), um ein analoges Signal in digitaler Form zu kodieren und den umgekehrten Vorgang der Dekodierung durchzuführen, ein Terminal, dadurch gekennzeichnet, daß es außerdem Mittel zum selektiven Anschluß (4, 7) umfaßt, um in Antwort auf eine Anforderung eines nicht transparenten Kanals (CCBNT) die Sende/Empfangs-Mittel (1) mittels des Modulator-Demodulators (3), gefolgt von dem Kodierer-Dekodierer (5), an die Leitung (2) anzuschließen und um in Antwort auf eine Anforderung eines transparenten Kanals (CCBT) die Sende/Empfangs-Mittel (1) direkt an die Leitung (2) anzuschließen, wobei dieses Terminal mit an ein Telefonwählnetz angeschlossenen Endgeräten kompatibel ist, bei denen nur eine Anforderung eines nicht transparenten Kanals (CCBNT) formuliert werden kann.

2. Terminal nach Anspruch 1, bei dem die Mittel zum selektiven Anschluß (4, 7) Mittel (72) zur Erkennung von Anforderungen eines nicht transparenten Kanals (CCBNT), die bei einer Verbindungsprozedur, welche auf einen Anrufempfang folgt, aus dem Netz kommen, und Mittel (1, 7) zur selektiven Erzeugung einer derartigen Anforderung bei einer Verbindungsprozedur, welche auf eine Anrufabsendung folgt, umfassen.

3. Terminal nach Anspruch 2, bei dem die Mittel zur selektiven Erzeugung (1, 71) Mittel (71) umfassen, um in Abhängigkeit von der Nummer (N) des angerufenen Teilnehmers festzustellen, ob dieser Teilnehmer an ein Telefonwählnetz angeschlossen ist, und um im Falle einer Bestätigung eine Anforderung eines nicht transparenten Kanals zu befehlen.

## Claims

1. A terminal (10) for transmission of digital data connected to a line (2) of a digital telephone network for which, during a connection procedure, a request for a non-transparent channel (CCBNT) or transparent channel (CCBT) is formulated according to whether the communication to be established is a conversation or an exchange of digital data respectively, comprising means (1) for transmitting-receiving digital data, a modulator-demodulator (3) for modulating an analogue signal according to digital data and for carrying out an operation of inverse demodulation, and an encoder-decoder (5) to encode an analogue signal in a digital form and to carry out the inverse decoding operation, characterised in that it additionally comprises selective connection means (4, 7) for connecting the said transmission-reception means (1) to the said line (2) by means of the said modulator-demodulator (3) followed by the said encoder-decoder (5) in response to a request for a non-transparent channel (CCBNT), and for connecting the said transmission-reception means (1) directly to the said line (2) in response to a request for a transparent channel (CCBT), the said terminal being compatible with terminals connected to a commutated telephone network for which terminals only a request for a non-transparent channel (CCBNT) can be formulated.

2. A terminal according to claim 1, in which the said selective connecting means (4, 7) comprise means (72) for detecting requests for a non-transparent channel (CCBNT) coming from the said network at the time of a process of consecutive connection to a call reception, and means (1, 71) for selectively generating such a request at the time of a process of consecutive connection to a call transmission.

3. A terminal according to claim 2, in which the said selective generation means (1, 71) comprise means (71) for determining, in response to the number (N) of the subscriber who is being called, whether this subscriber is connected to a commutated telephone network, and, in the case of the affirmative, for controlling a request for a non-transparent channel.
